# EUROPÄISCHE PATENTSCHRIFT

(11) **EP 0 650 328 B1**
(45) Veröffentlichungstag und Bekanntmachung des Hinweises auf die Patenterteilung: **05.06.1996**
(21) Anmeldenummer: 94912468.9
(22) Anmeldetag: 18.04.1994
(51) Int. Cl.: A23F 5/20, A23F 5/16

(54) **VERFAHREN ZUR ABREICHERUNG VON COFFEIN UND CHLOROGENSÄUREN AUS ROHKAFFEE**
METHOD FOR DEPLETING GREEN COFFEE OF CAFFEINE AND CHLOROGENIC ACIDS
PROCEDE PERMETTANT DE REDUIRE LA TENEUR EN CAFEINE ET EN ACIDES CHLOROGENIQUES DU CAFE VERT

(30) Priorität: 12.05.1993 DE 4316654
(43) Veröffentlichungstag der Anmeldung: 03.05.1995
(73) Patentinhaber: INSTITUT FÜR TECHNOLOGIE UND UMWELTSCHUTZ E.V., D-12484 Berlin (DE)
(72) Erfinder: ROETHE, Klaus-Peter, D-12439 Berlin (DE); ROETHE, Annemarie, D-12439 Berlin (DE); SUCKOW, Matthias, D-12435 Berlin (DE); MOTHES, Sigmar, D-10247 Berlin (DE); STACKFLETH, Mareen, D-10249 Berlin (DE)
(74) Vertreter: Henkel, Klaus-Joachim
(86) Internationale Anmeldenummer: DE9400430
(87) Internationale Veröffentlichungsnummer: WO9426125

(56) Entgegenhaltungen:
- EP-A- 0 158 381
- EP-A- 0 250 845
- WO-A-92/03061
- DE-A- 2 639 066
- DE-A- 3 719 991
- DE-A- 4 003 483
- US-A- 4 260 639
- US-A- 4 911 941

## Beschreibung

Die Erfindung betrifft ein Verfahren zur Abreicherung von Coffein und Chlorogensäuren aus Rohkaffee nach dem Oberbegriff des Anspruches 1.

Coffein wird im Röstprozeß des Rohkaffees nicht abgebaut.
Es ist ein Genußgift, dessen Gehalt im Kaffee durch Extraktionsprozesse seit langem bekannt herabsetzbar ist.

Chlorogensäuren werden im Röstprozeß des Kaffees zu magenreizenden Stoffen umgesetzt. In (Process Biochemistry, May 1975, p. 13) wird die Schlußfolgerung gezogen, daß ein niedriger Chlorogensäuregehalt die Kaffeequalität verbessert. Es ist auch hier wünschenswert, den Gehalt vor dem Röstprozeß mindestens abzureichern.

Es ist bekannt, daß Coffein aus Rohkaffee mit feuchtem Kohlendioxid im überkritischen Zustand entfernt werden kann (AT 290 962 /1971).
Man hat auch die Kenntnis, daß das Wasser, gelöst im Kohlendioxid unter überkritischen Zustandsbedingungen, die notwendige Polaritat des Extraktionsmittels zur Aufnahme des polaren Coffeins sicherstellt .
Es ist auch Praxis, im Verlauf bzw. vor der Entcoffeinierung in den Rohkaffeebohnen durch die verschiedensten Techniken einen definierten Wassergehalt oder eine Sättigung mit Wasser einzustellen.
Diese Techniken werden auch kombiniert mit sogenannten Aufschlüssen, z.B. durch Behandlung mit gespanntem Wasserdampf bei erhöhter Temperatur.

Durch eine kürzlich vorgelegte physikalisch begründete Analyse der Transportschritte beim Coffeinentzug mit Kohlendioxid im überkritischen Zustand aus in einer Schüttung angeordnetem Rohkaffee (Chem. Techn. 44 (1992) 243) konnte sichergestellt werden, daß das Coffein im Inneren der Kaffeebohne ausschließlich in mit Wasser gefüllten Zellen, im Konzentrationsgradienten zur Kornoberfläche, aktiviert migriert. Der Wassergehalt der Rohkaffeebohne ist also für den Entcoffeinierungsprozeß notwendig. Der Diffusionsprozeß im Inneren der Kaffeebohne ist unabhängig von dem im Zwischenkornvolumen geführten Extraktionsmittel.

Es hat sich auch gezeigt, daß ein Sekundärporensystem in den Rohkaffeebohnen, eingebracht durch häufig empfohlene Aufschlußprozesse, nur eine untergeordnete Bedeutung als Coffeintransportweg hat.
Offenbart hat die Analyse der Transportprozesse weiterhin, daß der Übergangswiderstand für das Coffein vom Kaffeebohnenkornrand zum Kohlendioxid im Zwischenkornvolumen der Schüttung ungewöhnlich hoch ist, also nicht den Erfahrungen entspricht. Erklärungsvorschläge waren Stofftransportbarrieren am Kaffeebohnenrand, gebildet von der Natur bzw. als Resultat zeitkonsumierender Solvatationsveränderungen des Coffeins. Im Kaffeebohneninneren ist das Coffein mit Wasser umhüllt, im Zwischenkornvolumen mit CO₂.

Zur gezielten Beeinflussung des dynamischen Prozesses der Entcoffeinierung von Rohkaffee in einer Schüttung wurde vorgeschlagen, trockenen Rohkaffee und Kohlendioxid im überkritischen Zustand mit einem die Löslichkeit übersteigenden Wassergehalt zu benutzen (DE 4003 483 / 1990). Die Menge des Überschußwassers ist dabei so dimensioniert, daß schichtweise die notwendige Befeuchtung des trocken in den Extraktor eingebrachten Rohkaffees erfolgt. Die Konsequenz ist, daß die Schüttung nur mit dem axialen Fortschreiten der Befeuchtung der Rohkaffeeschichten am Extraktionsprozeß teilnimmt. Auf eine hohe Ausnutzung der Beladungskapazität des Extraktionsmittels, eine Bedingung für kurze Extraktionszeiten, ist hier schon konzeptionell verzichtet worden.
Außerdem ist anschließend an den Entcoffeinierungsprozeß eine Weiterbehandlung mit Wasser, in dem Kaffeearomastoffe angereichert sind, notwendig.

Bisher ist nicht bekannt geworden, daß Chlorogensäuren in Kohlendioxid im überkritischen Zustand transportiert werden konnten.

Es wurde auch kein Vorschlag bekannt zur simultanen Abreicherung des Coffein- bzw. Chlorogensäuregehaltes in Rohkaffee unter Anwendung von Kohlendioxid im überkritischen Zustand.

Der Erfindung liegt die Aufgabe zugrunde, eine verfahrenstechnische Lösung dafür zu schaffen, um bei Rohkaffee die Abreicherungszeit für Coffein entscheidend zu verkürzen und simultan einen hohen Prozentsatz an Chlorogensäuren zu entfernen.

Es mußten Wege gefunden werden, um hohe Transportkoeffizienten sowie große Triebkräfte während des Extraktionsprozesses, sowohl innerhalb des Kaffeekorns als auch am Kaffeekornrand, zu erreichen und um Coffein und Chlorogensäuren gleichzeitig abreichern zu können.

Diese Aufgabe wird beim gattungsgemäßen Verfahren erfindungsgemäß durch die kennzeichnenden Merkmale des Anspruches 1 gelöst.

Befeuchteter Rohkaffee wird mit wassergesättigtem Kohlendioxid im überkritischen Zustand behandelt, wobei erfindungsgemäß die Schüttung aus Rohkaffee im Extraktor zusätzlich mit Wasser im flüssigen Zustand beaufschlagt wird.
Zur Coffeinabreicherung genügt kontinuierliche Wasserbeaufschlagung, simultane Abreicherung von Coffein und Chlorogensäuren erfordert pulsartige Wasserzugabe.
Das Kohlendioxid im überkritischen Zustand kann in bezug zur Wasserbeaufschlagung im Gleichstrom oder im Gegenstrom geführt werden.
Der Extraktionsprozeß wird wie üblich bei einem Druck im Bereich von 180 bis 300 bar, bei einer Temperatur im Bereich von 50 bis 80°C und einem Kohlendioxiddurchsatz von etwa 10 bis 100 g CO₂ / g Rohkaffee (Trockenmasse) h durchgeführt.
Der Wasserdurchsatz beträgt 1 bis 4 g Wasser / g Rohkaffee (TM) h, bei pulsförmiger Zugabe aufgeteilt in 1 bis 4 Pulse mit Pulsbreiten zwischen 3 und 10 Minuten. Die Pulse beginnen sofort mit der Durchleitung des wassergesättigten Kohlendioxids im überkritischen Zustand.
Gegen Ende der Extraktion können die Pulsfrequenzen herabgesetzt werden.

Im einzelnen stellt sich der Abreicherungsvorgang wie folgt dar:

Die Hochdruckextraktionsapparatur besteht aus der Dosierpumpe, dem Vorheizer, dem mit Wasser gefüllten Sättiger, dem Extraktor, dem Abscheider für Wasser, einer mit Wasser gefüllten Vorlage und dem Entspannungsventil.
Am Kopf des Extraktors befindet sich eine Wasserzuleitung.
Die Strömungsrichtung des wassergesättigten, überkritischen Kohlendioxid durch den Extraktor ist umschaltbar mit Eingang von oben oder von unten in die Schüttung.

Der mit einer definierten Wassermenge befeuchtete Rohkaffee (ca. 50 % Wassergehalt) wird in den Hochdruckextraktor eingefüllt. Nachdem die Extraktionstemperatur im Extraktor und im CO₂-Strom sowie die Strömung des wassergesättigten, überkritischen Kohlendioxids eingestellt sind, wird kontinuierlich oder pulsartig mit vorgegebener Frequenz Wasser im flüssigen Zustand von oben über die Rohkaffee-Schüttung gegeben.
Wird die Kohlendioxidströmung von oben nach unten durch den Extraktor geleitet, können das zugegebene Wasser und die extrahierten Komponenten am Extraktorausgang in einer Vorlage aufgefangen werden.
Die extrahierten Komponenten Coffein und Chlorogensäuren sind in Wasser gelöst.
Wird die Kohlendioxidströmung im Gegenstrom zur Wasserströmung von unten nach oben geführt, wird das zusätzlich zugegebene Wasser am unteren Eingang des Extraktors in einem Abscheider aufgefangen.

Ein Teil der extrahierten Komponenten Coffein und Chlorogensäuren befindet sich in diesem Abscheider, der andere Teil wird mit dem wassergesättigten, überkritischen Kohlendioxid oben aus dem Extraktor ausgeführt und in einer mit Wasser gefüllten Vorlage unter Druck ausgewaschen. Im Technikumsversuch wird das Kohlendioxid anschließend entspannt und über Dach geleitet. In der Technik kann das aus der Vorlage austretende, coffein- und chlorogensäurefreie, wassergesättigte, überkritische Kohlendioxid direkt in den Kreislauf eines Extraktors oder in den Kreislauf einer Reihenschaltung mehrerer Extraktoren geführt werden.

Das erfindungsgemäße Verfahren wird nachfolgend an einigen Ausführungsbeispielen näher erläutert.
1. Die Extraktion von befeuchtetem Rohkaffee wird mit wassergesättigtem, überkritischem Kohlendioxid bei 60°C und 200bar vorgenommen.
   Die Kohlendioxid-Strömung erfolgt von oben nach unten durch die Rohkaffee-Schüttung. Die Belastung mit wassergesättigtem, überkritischem Kohlendioxid beträgt 13 g CO₂ /g Rohkaffee (TM) h.
   Nach etwa 14 h wird durch Extraktion von etwa 1 Ma.-% Coffein der zulässige Coffein-Restgehalt im Rohkaffee erreicht.
   Chlorogensäuren werden nicht bzw. nur in Spuren extrahiert.
2. wie Beispiel 1.
   Die Belastung mit wassergesättigtem, überkritischem Kohlendioxid beträgt 25 g CO₂ /g Rohkaffee (TM) h.
   Nach etwa 7 h wird durch Extraktion von etwa 1 Ma.-% Coffein der zulässige Coffein-Restgehalt im Rohkaffee erreicht.
   Chlorogensäuren werden nicht bzw. nur in Spuren extrahiert.
3. wie Beispiel 1.
   Zusätzlich wird von oben pulsartig flüssiges Wasser auf die Rohkaffee-Schüttung aufgegeben. Es werden nach 15; 30; 45; 60; 90; 120; 150; 180; 240 Minuten jeweils 1 g Wasser / g Rohkaffee (TM) aufgegeben. Die Pulsbreite beträgt 9 Minuten.
   Nach etwa 6 h wird durch Extraktion von etwa 1 Ma.% Coffein der zulässige Coffein-Restgehalt im Rohkaffee erreicht.
   Die Extraktionszeit beträgt im Vergleich zu Ausführungsbeispiel 1 nur etwa 40 %. Nach 6 h sind simultan etwa 1,6 Ma.-% Chlorogensäuren extrahiert.
4. wie Beispiel 2.
   Zusätzlich wird von oben pulsartig flüssiges Wasser auf die Rohkaffee-Schüttung aufgegeben. Es werden nach 15; 30; 45; 60; 90; 120; 150; 180; 240 Minuten jeweils 1 g Wasser / g Rohkaffee (TM) aufgegeben. Die Pulsbreite beträgt 9 Minuten.
   Nach etwa 3 h wird durch Extraktion von etwa 1 Ma.-% Coffein der zulässige Coffein-Restgehalt im Rohkaffee erreicht.
   Die Extraktionszeit beträgt im Vergleich zu Ausführungsbeispiel 2 nur etwa 40 %.
   Nach 3 h sind simultan etwa 1,3 Ma.-% Chlorogensäuren extrahiert.
5. wie Beispiel 1.
   Zusätzlich wird flüssiges Wasser kontinuierlich von oben auf die Rohkaffee-Schüttung aufgegeben. Die Fördermenge beträgt 2 g Wasser / g Rohkaffee (TM) h.
   Nach 6 h Extraktionszeit wird etwa 1 Ma.-% Coffein aus dem Rohkaffee extrahiert.
   Im Vergleich zu Beispiel 1 (ohne Wasserzugabe) beträgt die Extraktionszeit für Coffein nur 40 %. Im Vergleich zu Beispiel 3 (pulsartige Wasserzugabe) sind extrahierter Coffeinanteil und Extraktionszeit praktisch gleich.
   Nach 6 h Extraktionszeit werden simultan 1,2 Ma.-% Chlorogensäuren aus dem Rohkaffee extrahiert.
   Der extrahierte Chlorogensäureanteil liegt im Vergleich zu Beispiel 1 (ohne Wasserzugabe) um 1,2 Ma.-% höher und im Vergleich zu Beispiel 3 (pulsartige Wasserzugabe) um 0,4 Ma.-% niedriger.

## Patentansprüche

1. Verfahren zur Abreicherung von Coffein und Chlorogensäuren aus Rohkaffee durch Extraktion des befeuchteten Rohkaffees mit wassergesättigtem, überkritischem Kohlendioxid dadurch gekennzeichnet, daß zur drastischen Beschleunigung der Entcoffeinierung und zur simultanen Abreicherung von Chlorogensäuren die zur Extraktion eingesetzte, mit Wasser befeuchtete Rohkaffee-Schüttung im Extraktor pulsierend und von oben zusätzlich mit Wasser im flüssigen Zustand beaufschlagt wird.

2. Verfahren nach Anspruch 1, dadurch gekennzeichnet, daß die pulsierende Zugabe von Wasser in 1 bis 4 Pulsen pro h erfolgt, wobei die Pulsbreite 3 bis 10 Minuten, vorzugsweise 5 bis 9 Minuten beträgt und die Pulsfrequenz am Ende der Extraktion zurückgenommen wird, vorzugsweise auf 1 Puls pro h.

3. Verfahren nach Anspruch 1 und 2, dadurch gekennzeichnet, daß die zusätzliche Zugabe von Wasser zum befeuchteten Rohkaffee 0,5 bis 10 g Wasser / g Rohkaffee (Trockenmasse) h, vorzugsweise 1 bis 4 g Wasser / g Rohkaffee(Trockenmasse) h beträgt.

4. Verfahren nach Anspruch 1 bis 3, dadurch gekennzeichnet, daß die Strömung des wassergesättigten, überkritischen Kohlendioxids im Gleichstrom oder im Gegenstrom zur zusätzlichen Zugabe von Wasser verläuft.

## Claims

1. The procedure for the reduction of caffeine and chlorogenic acids from raw coffee by extracting the moistened raw coffee with water-saturated, supercritical carbon dioxide is marked by the fact that - for the purpose of the drastic acceleration of decaffeination and the simultaneous reduction of chlorogenic acids - the raw coffee used for extraction and moistened with water is, in a pulsating manner, poured in the extractor and is, in addition, perfused from above with water in liquid form.

2. The procedure according to claim 1 is marked by the fact that water ist added in a pulsating manner in 1 to 4 pulses per h, with a pulse width of 3 to 10 minutes, preferably 5 to 9 minutes and with reducing the pulse frequency at the end of the extraction, preferably to 1 pulse per h.

3. The procedure according to claim 1 and 2 is marked by the fact that the water added in addition to the moistened raw coffee amounts to 0.5 to 10 g water / g raw coffee (dry mass) h, preferably 1 to 4 g water / g raw coffee (dry mass).

4. The procedure according to claim 1 to 3 ist marked by the fact, that the water-saturated, supercritical carbon dioxide flows in a parallel or a reverse direction to the water added in addition.

## Revendications

1. Procédé pour la réduction en caféine et acides chlorogènes du café brut par l'extraction du café brut humidifié par le gaz carbonique surcritique saturé d'eau, caractérisé par le fait que, pour une accélération énorme de la décaféination et pour la réduction simultanée en acides chlorogènes, le déversement du café brut humidifié mis à l'extraction est alimenté en plus, dans l'extracteur, par des pulsations d'eau en état liquide venant d'en haut.

2. Procédé suivant la demande 1, caractérisé par le fait que l'addition pulsatoire d'eau se réalise en 1 à 4 pulsations par heure, la durée d'impulsion se situant entre 3 et 10 minutes, de préférence entre 5 et 9 minutes, la fréquence d'impulsion se réduisant vers la fin de l'extraction, de préférence à 1 pulsation par heure.

3. Procédé suivant les demandes 1 et 2, caractérisé par le fait que l'addition supplémentaire d'eau au café brut humidifié est de 0,5 à 10 g d'eau / g café brut (poids en sec) h, de préférence entre 1 et 4 g d'eau / g café brut (poids en sec) h.

4. Procédé suivant les demandes 1 à 3, caractérisé par le fait que le courant du gaz carbonique surcritique saturé en eau se réalise en courant parallèle ou en courant inverse à l'addition supplémentaire d'eau.
